# EUROPÄISCHE PATENTSCHRIFT

(11) **EP 1 341 641 B1**
(45) Veröffentlichungstag und Bekanntmachung des Hinweises auf die Patenterteilung: **16.02.2005**
(21) Anmeldenummer: 01270404.5
(22) Anmeldetag: 14.12.2001
(51) Int. Cl.: B23K 35/38, B23K 9/16

(54) **SCHUTZGAS UND VERFAHREN ZUM LICHBOGENSCHWEI EN**
SHIELDING GAS AND ARC-WELDING METHOD
GAZ INERTE ET PROCEDE DE SOUDAGE A L'ARC

(30) Priorität: 15.12.2000 DE 10062563
(43) Veröffentlichungstag der Anmeldung: 10.09.2003
(73) Patentinhaber: Linde Aktiengesellschaft, 65189 Wiesbaden (DE)
(72) Erfinder: TRUBE, Stefan, 35745 Herborn-Guntersdorf (DE); AMMANN, Thomas, 81379 München (DE)
(74) Vertreter: Gellner, Bernd, Dr.
(86) Internationale Anmeldenummer: PCT/EP2001/014800
(87) Internationale Veröffentlichungsnummer: WO 2002/047864

(56) Entgegenhaltungen:
- EP-A- 0 163 379
- EP-A- 0 680 802
- DD-A- 133 538
- US-A- 3 066 215
- US-A- 5 083 002
- US-A- 6 111 219
- BONNET C ET AL: "NOUVEAU GAZ DE PROTECTION POUR LE SOUDAGE DES DUPLEX ET SUPER-DUPLEX" SOUDAGE ET TECHNIQUES CONNEXES, PUBLICATIONS DU SOUDAGE ET DE SES APPLICATIONS, FR, Bd. 51, Nr. 7/8, 1. Juli 1997 (1997-07-01), Seiten 53-59, XP000696435 ISSN: 0246-0963
- RUNNERSTAM O ET AL: "ASPECTS OF PORE FORMATION IN GMAW" WELDING AND METAL FABRICATION, IPC LTD. HAYWARDS HEATH, GB, Bd. 58, Nr. 10, 1. Dezember 1990 (1990-12-01), Seiten 553-554, XP000204833 ISSN: 0043-2245

## Beschreibung

Die Erfindung betrifft ein Schutzgas zum Lichtbogenschweißen von metallischen Werkstücken. Die Erfindung betrifft ferner ein Verfahren zum Lichtbogenschweißen von metallischen Werkstücken mit abschmelzender Elektrode, wobei ein Schutzgasstrom benachbart zur Elektrode dem Werkstück zugeführt wird.

In der industriellen Anwendung sind zahlreiche Schutzgase für das Schweißen von Metallen unter Schutzgas bekannt, wobei je nach der Zusammensetzung bzw. dem Material des zu schweißenden Werkstücks und/oder in Abhängigkeit von der Art des Schweißverfahrens unterschiedliche Schutzgase zum Einsatz kommen.

Das Schutzgasschweißen (SG-Schweißen) wird im Hinblick auf die Art der verwendeten Elektrode in Metallschutzgasschweißen (MSG-Schweißen) .mit abschmelzender Elektrode und Schweißverfahren mit nicht abschmelzender Elektrode wie das Wolfram-Inertgas-Schweißen (W)G-Schweißen) eingeteilt Als Varianten des MSG-Schweißen sind bekannt und werden häufig angewendet das Metati-Aktivgas-Schweißen (MAG-Schweißen) oder das Metall-lnertgas-Schweißen (MIG-Schweißen).

Es werden von der Linde Gas AG beispielsweise zwei Schweißschutzgase unter den Bezeichnungen CRONIGON® He 50 S bzw. CRONIGON® He 30 S vertrieben. Diese Gasgemische enthalten 0,05 Vol.-% CO₂, 50 Vol.-% Helium, Rest Argon bzw. 0,05 Vol.-% CO₂, 30 Vol.-% Helium, 2 Vol.-% H₂, Rest Argon (vgl. beispielsweise Unde-Prospekt "Schweißschutzgase"). Die US 5 083 022 beinhaltet eine Schutzgasmischung aus 0,1 bis 0,9 Vol.-% Kohlendioxid, 5 bis 12 Vol: % Helium und restlich Argon.

Scheißschutzgasmischungen, welche Argon, Stickstoff, Kohlendioxid und teilweise auch Helium enthalten, sind in der EP 163 397, in der EP 680 BO2, in der US 6111 219 und in dem Artikel "Nouveau gaz de protection pour le soudage des duplex et superduplex" von C. Bonnet et al., Soudage et techniques connexes, Publication du soudage et de ses applications, Bd. 51, Nr. 7/8,1997, S.53-57, sowie in dem Artikel "Aspects of pore formation in GMAW" von O. Rannerstam et al., Welding and Metal Fabrication, IPC LTD. Haywards Heath, GB, Bd. 58, Nr. 10, 1990. S. 553-554 offenbart Die VolumenanteiJe von Kohlendioxid und Stickstoff liegen in diesen Offenbarungen im Bereich von einigen Prozenten.

Bestimmte höchwermfeste Nickel-Basis-Legierungen und Sonderedelstähle wie zB.. alloy 602CA (Werkstoff-Nr. 2.4633) sind bisher nicht zufriedenstellend mit MIG/MAG-Verfahren schweißbar. Die Verwendung bekannter Schutzgase führt zu unzüreichenden Ergebnissen und vor allem zu inakzeptablen mechanisch-technologischen Eigenschaften der Schweißnähte.

Bei einer anderen Werkstoffgruppe auf Nickel-Basis, nämlich den hochkorrosionsbeständigen Legierungen wie z.B. alloy 59 (Werkstoff-Nr. 2.4605), führt das MIG/MAG-Schweißen dazu, dass die Korrosionsbeständigkeit der Schweißnaht zwar gegeben ist, jedoch nicht ganz diejenige des Grundwerkstoffes erreicht

Der vorliegenden Erfindung liegt die Aufgabe zu Grunde, ein Schutzgas und ein Verfahren der eingangs genannten Art zur Verfügung zu stellen, wobei Verbesserungen oder Alternativen zu bekannten Schweißschutzgasen aufgezeigt werden. Aufgabe der Erfindung ist es femer, Schweißschutzgase vorzuschlagen, mit denen rostfreie metallische Werkstoffe, insbesondere die erwähnten hochwarmfesten nickelbasierenden Legierungen, aber auch hochlegierte Stähle mit einem MSG- bzw. MAG-Verfahren schweißbar sind. Eine weitere Aufgabe der Erfindung ist es, insbesondere bei korrosionsbeständigen Legierungen die hohe Korrosionsbeständigkeit des Grundwerkstoffes auch in der Schweißnaht zu erreichen.

Diese Aufgaben werden erfindungsgemäß dadurch gelöst, dass das Schutzgas neben Argon und Kohlendioxid. welches im Schutzgas zwischen 0,001 und 0,75 Vol.-% enthalten ist,
a) im Falle, dass das Schutzgas kein Helium enthält, aus Stickstoff mit einem Anteil zwischen 4,5 Vol.-% und 15 Vol.-%
   und
b) im Falle, dass das Schutzgas zusätzlich auch Helium enthält, aus Stickstoff mit einem Anteil zwischen 3 und 15 Vol.-%
besteht.

Vorteilhafte Ausführungen, Ausgestaltungen und Weiterbildung der Erfindung, insbesondere Zusammensetzungen von bevorzugt geeigneten Gasen sind Gegenstände der Unteransprüche.

Vorteilhafterweise kann das Schutzgas neben Argon und Kohlendioxid, welches im Schutzgas zwischen 0,001 und 0,75 Vol.-% enthalten ist,
a) im Falle, dass das Schutzgas kein Helium enthält, Stickstoff mit einem Anteil zwischen 5 und 14 Vol.-%
   und
b) im Falle, dass das Schutzgas zusätzlich auch Helium enthält, Stickstoff mit einem Anteil zwischen 4 und 14 Vol.-%
enthalten.

Unter Helium-freiem Schutzgas wird im Rahmen der Erfindung verstanden, dass das Schutzgas bis auf mögliche Verschmutzungen bzw. Verunreinigungen kein Helium aufweist.

Insbesondere kann das Schutzgas neben Argon, Kohlendioxid und Helium zwischen 4,5 und 15 Vol.-% Stickstoff, vorzugsweise zwischen 5 und 14 Vol.-% Stickstoff, enthalten.

Vorteilhafterweise enthält das Schutzgas zwischen 0,01 und 0,5 Vol.-% Kohlendioxid, vorzugsweise zwischen 0,01 und 0,45 Vol.-% Kohlendioxid, besonders bevorzugt zwischen 0,01 und 0,1 Vol.-% Kohlendioxid.

Es hat sich als günstig gezeigt, dass das Schutzgas zwischen 5 und 12 Vol.-% Stickstoff, vorzugsweise zwischen 5 und 10 Vol.-% Stickstoff, besonders bevorzugt zwischen 6 und 9 Vol.-% Stickstoff enthält.

In Weiterbildung der Erfindung enthält das Schutzgas weniger oder gleich 70 Vol.-% Helium. insbesondere ist günstig, dass das Schutzgas zwischen 1 und 50 Vol.-% Helium, vorzugsweise zwischen 2 und 30 Vol.-% Helium, besonders bevorzugt zwischen 3 und 20 Vol.-% Helium, ganz besonders bevorzugt zwischen 5 und 10 Vol.-% Helium enthält.

Das Schutzgas besteht somit entweder
- aus einem temären Gasgemisch mit den Komponenten Argon, Stickstoff und Kohlendioxid,
   oder
- aus einem quaternären Gasgemisch mit den Komponenten Argon, Stickstoff, Kohlendioxid und Helium.
Dabei werden insbesonder die Anteile an Stickstoff, an Kohlendioxid und gegebenenfalls an Helium entsprechend der oben erwähnten Vorgaben und Intervalle gewählt. Argon bildet den Rest.

Die gestellten Aufgaben werden erfindungsgemäß im Hinblick auf das Verfahren, vorzugsweise ein MSG-Schweißverfahren, insbesondere das MAG-Schweißen, dadurch gelöst, dass ein Schutzgas wie oben beschrieben verwendet wird.

Erfindungsgemäß wird eine Verwendung eines Schutzgasgemisches mit einer Zusammensetzung, die den-angeführten Vorgaben Rechnung trägt, für das MSG-Schweißen, insbesondere das MAG-Schweißen, von rostfreien Stählen, insbesondere von Nickelbasiswerkstoffen, Sonderstählen oder von hochlegierten Stählen empfohlen.

Ein erfindungsgemäßes Schweißschutzgas mit hervorragender Eignung stellen temäre oder quaternäre Gasgemische dar, die
- 500 vpm CO₂,
- 5 bis 6 Vol.-% N₂,
- ggf. 5 bis 10 Vol.-% He und
- restlich Ar
enthalten.

Mit den erfindungsgemäßen Schutzgasen können hochwarmfeste Nickel-Basis-Legierungen wie z.B. alloy 602CA (Werkstoff-Nr. 2.4633) MAG-geschweißt werden. Dabei sind die mechanisch-technologischen Eigenschaften der Schweißnaht beinahe vollständig erhalten, verglichen mit dem Grundwerkstoff.

Vorteilhaft ist die Anwendung dieses Gasgemisches auch bei hochkorrosionsbeständigen Nickelbasiswerkstoffen, wie z.B. alloy 59 (Werkstoff-Nr. 2.4605), bei dem das erfindunsgemäße Gasgemsich die Korrosionsbeständigkeit der Naht praktisch der des Grundwerkstoffes angleicht.

Das erfindungsgemäße Schutzgas enthält neben Kohlendioxid und Stickstoff Argon und gegebenenfalls Helium. Der CO₂-Antell dient dabei vermutlich der Lichtbogenstabilisierung und der Vermeidung von Bindefehlern. Der Stickstoffanteil übt vermutlich einen metallurgischen Einfluss aus. Ebenfalls wahrscheinlich ist eine erwünschte Beeinflussung der Stickstoffaufnahme im Schweißgut durch das CO₂.

## Patentansprüche

1. Schutzgas zum Lichtbogenschweißen von metallischen Werkstücken, **dadurch gekennzeichnet, dass** das Schutzgas neben Argon und Kohlendioxid, welches im Schutzgas zwischen 0,001 und 0,75 Vol-% enthalten ist,
a) im Falle, dass das Schutzgas kein Helium enthält, aus Stickstoff mit einem Anteil zwischen 4,5 Vol.-% und 15 Vol.-%
und
b) im Falle, dass das Schutzgas zusätzlich auch Helium enthält, aus Stickstoff mit einem Anteil zwischen 3 und 15 Vol.-%
besteht.

2. Schutzgas nach Anspruch 1, **dadurch gekennzeichnet, dass** das Schutzgas neben Argon und Kohlendioxid, weiches im Schutzgas zwischen 0,001 und 0,75 Vol.-% enthälten ist,
a) im Falle, dass das Schutzgas kein Helium enthält, Stickstoff mit einem Anteil zwischen 5 und 14 Vol.-%
und
b) im Falle, dass das Schutzgas zusätzlich auch Helium enthält, Stickstoff mit einem Anteil zwischen 4 und 14 Vol.-%
enthält.

3. Schutzgas nach Anspruch 1 oder 2, **dadurch gekennzeichnet, dass** das Schutzgas neben Argon, Kohlendioxid und Helium zwischen 4,5 und 15 Vol.-% Stickstoff, vorzugsweise zwischen 5 und 14 Vol.-% Stickstoff enthält

4. Schutzgas nach einem der Ansprüche 1 bis 3, **dadurch gekennzeichnet, dass** das Schutzgas zwischen 5 und 12 Vol.-% Stickstoff, vorzugsweise zwischen 5 und 10 Vol.-% Stickstoff, besonders bevorzugt zwischen 6 und 9 Vol.-% Stickstoff enthält.

5. Schutzgas nach einem der Ansprüche 1 bis 4, **dadurch gekennzeichnet, dass** das Schutzgas zwischen 0,01 und 0,5 Vol.-% Kohlendioxid, vorzugsweise zwischen 0,01 und 0,45 Vol.-% Kohlendioxid, besonders bevorzugt zwischen 0,01 und 0,1 Vol.-% Kohlendioxid enthält.

6. Schutzgas nach einem der Ansprüche 1 bis 5, **dadurch gekennzeichnet, dass** das Schutzgas weniger oder gleich 70 Vol.-% Helium enthält.

7. Schutzgas nach einem der Ansprüche 1, 2 oder 4 bis 6, **dadurch gekennzeichnet, dass** das Schutzgas zwischen 1 und 50 Vol.-% Helium, vorzugsweise zwischen 2 und 30 Vol.-% Helium,- besonders bevorzugt zwischen 3 und 20 Vol.-% Helium, ganz besonders bevorzugt zwischen 5 und 10 Vol.-% Helium enthält

8. Schutzgas nach einem der Ansprüche 1 bis 7, **dadurch gekennzeichnet, dass** das Schutzgas aus einem
• ternären Gasgemisch mit den Komponenten Argon, Stickstoff und Kohlendioxid, oder
• quaternären Gasgemisch mit den Komponenten Argon, Stickstoff, Kohlendioxid und Helium
besteht, wobei Argon bevorzugt den Rest bildet.

9. Verfahren zum Lichtbogenschweißen von metallischen Werkstücken mit abschmelzender Elektrode, wobei ein Schutzgasstrom benachbart zur Elektrode dem Werkstück zugeführt wird, **dadurch gekennzeichnet, dass** ein Schutzgas nach einem der Ansprüche 1 bis 8 verwendet wird.

10. Verwendung eines Schutzgases nach einem der Ansprüche 1 bis 8 für das MSG-Schweißen, insbesondere das MAG-Schweißen, von rostfreien Stählen, insbesondere von Nickelbasiswerkstoffen, Sonderstählen oder von hochlegierten Stählen.

## Claims

1. Shielding gas for the arc-welding of metallic workpieces, **characterized in that**, apart from argon and carbon dioxide, which is contained in the shielding gas between 0.001 and 0.75% by volume,
a) in the case where it contains no helium, the said shielding gas comprises nitrogen with a proportion of between 4.5% by volume and 15% by volume
and
b) in the case where it additionally also contains helium, the said shielding gas comprises nitrogen with a proportion of between 3 and 15% by volume.

2. Shielding gas according to Claim 1, **characterized in that**, apart from argon and carbon dioxide, which is contained in the shielding gas between 0.001 and 0.75% by volume,
a)in the case where it contains no helium, the said shielding gas contains nitrogen with a proportion of between 5 and 14% by volume
and
b)in the case where it additionally also contains helium, the said shielding gas contains nitrogen with a proportion of between 4 and 14% by volume.

3. Shielding gas according to Claim 1 or 2, **characterized in that**, apart from argon, carbon dioxide and helium, the shielding gas contains between 4.5 and 15% by volume of nitrogen, preferably between 5 and 14% by volume of nitrogen.

4. Shielding gas according to one of Claims 1 to 3, **characterized in that** the shielding gas contains between 5 and 12% by volume of nitrogen, preferably between 5 and 10% by volume of nitrogen, with particular preference between 6 and 9% by volume of nitrogen.

5. Shielding gas according to one of Claims 1 to 4, **characterized in that** the shielding gas contains between 0.01 and 0.5% by volume of carbon dioxide, preferably between 0.01 and 0.45% by volume of carbon dioxide, with particular preference between 0.01 and 0.1% by volume of carbon dioxide.

6. Shielding gas according to one of Claims 1 to 5, **characterized in that** the shielding gas contains less than or equal to 70% by volume of helium.

7. Shielding gas according to one of Claims 1, 2 or 4 to 6, **characterized in that** the shielding gas contains between 1 and 50% by volume of helium, preferably between 2 and 30% by volume of helium, with particular preference between 3 and 20% by volume of helium, with most particular preference between 5 and 10% by volume of helium.

8. Shielding gas according to one of Claims 1 to 7, **characterized in that** the shielding gas comprises a
■ ternary gas mixture with the components argon, nitrogen and carbon dioxide, or
■ quaternary gas mixture with the components argon, nitrogen, carbon dioxide and helium, argon preferably forming the remainder.

9. Method for the arc-welding of metallic workpieces with a consumable electrode, a stream of shielding gas being supplied to the workpiece adjacent to the electrode, **characterized in that** a shielding gas according to one of Claims 1 to 8 is used.

10. Use of a shielding gas according to one of Claims 1 to 8 for the MSG welding, in particular MAG welding, of stainless steels, in particular nickel-based materials, special steels or high-alloy steels.

## Revendications

1. Gaz inerte pour le soudage à l'arc de pièces à usiner métalliques, **caractérisé en ce que** parallèlement à de l'argon et à du dioxyde de carbone, qui est contenu dans le gaz inerte dans une quantité comprise entre 0,001 et 0,75 % en volume,
a) dans le cas où le gaz inerte ne contient pas d'hélium, le gaz inerte est constitué d'azote, dans une proportion comprise entre 4,5 % en volume et 15 % en volume, et
b) dans le cas où le gaz inerte contient également de l'hélium en supplément, le gaz inerte est constitué d'azote, dans une proportion comprise entre 3 et 15 % en volume.

2. Gaz inerte selon la revendication 1, **caractérisé en ce que** parallèlement à de l'argon et à du dioxyde de carbone, qui est contenu dans le gaz inerte dans une quantité comprise entre 0,001 et 0,75 % du volume,
a) dans le cas où le gaz inerte ne contient pas d'hélium, le gaz inerte contient de l'azote, dans une proportion comprise entre 5 et 14 % en volume, et
b) dans le cas où le gaz inerte contient également de l'hélium en supplément, le gaz inerte contient de l'azote, dans une proportion comprise entre 4 et 14 % en volume.

3. Gaz inerte selon la revendication 1 ou 2, **caractérisé en ce que** parallèlement à de l'argon, du dioxyde de carbone et de l'hélium, le gaz inerte contient de 4,5 à 15 % en volume d'azote, de préférence entre 5 et 14 % en volume d'azote.

4. Gaz inerte selon l'une quelconque des revendications 1 à 3, **caractérisé en ce que** le gaz inerte contient entre 5 et 12 % en volume d'azote, de préférence entre 5 et 10 % en volume d'azote, de façon particulièrement préférée entre 6 et 9 % en volume d'azote.

5. Gaz inerte selon l'une quelconque des revendications 1 à 4, **caractérisé en ce que** le gaz inerte contient entre 0,01 et 0,5 % en volume de dioxyde de carbone, de préférence entre 0,01 et 0,45 % en volume de dioxyde de carbone, de façon particulièrement préférée entre 0,01 et 0,1 % en volume de dioxyde de carbone.

6. Gaz inerte selon l'une quelconque des revendications 1 à 5, **caractérisé en ce que** la quantité d'hélium contenue dans le gaz inerte est inférieure ou égale à 70 % en volume.

7. Gaz inerte selon l'une quelconque des revendications 1, 2 ou 4 à 6, **caractérisé en ce que** le gaz inerte contient entre 1 et 50 % en volume d'hélium, de préférence entre 2 et 30 % en volume d'hélium, de façon particulièrement préférée entre 3 et 20 % en volume d'hélium et de façon tout particulièrement préférée entre 5 et 10 % en volume d'hélium.

8. Gaz inerte selon l'une quelconque des revendications 1 à 7, **caractérisé en ce que** le gaz inerte est constitué
• d'un mélange de gaz ternaire, avec les composants argon, azote, dioxyde de carbone ou
• d'un mélange de gaz quaternaire, avec les composants argon, azote, dioxyde de carbone et hélium,
l'argon formant de préférence le radical.

9. Procédé de soudage à l'arc de pièces à usiner métalliques avec une électrode en fusion, un flux de gaz inerte étant amené vers la pièce à usiner, à proximité de l'électrode, **caractérisé en ce qu'**un gaz inerte selon l'une quelconque des revendications 1 à 8 est utilisé.

10. Utilisation d'un gaz inerte selon l'une quelconque des revendications 1 à 8 pour le soudage MSG, notamment le soudage MAG d'aciers inoxydables, notamment de matériaux à base de nickel, d'aciers spéciaux ou d'aciers hautement alliés.
